**Europäisches Patentamt**

**European Patent Office**

**Office européen des brevets**

(19)

(11) Veröffentlichungsnummer: **0 144 602**
**B1**

(12) # EUROPÄISCHE PATENTSCHRIFT

(45) Veröffentlichungstag der Patentschrift:
06.04.88

(21) Anmeldenummer: **84111896.1**

(22) Anmeldetag: **04.10.84**

(51) Int. Cl.⁴: **B 25 J 19/00,** B 23 K 11/36,
F 16 L 3/22

(54) **Haltevorrichtung für Versorgungsleitungen bei Manipulatoren.**

(30) Priorität: **19.10.83 DE 3337948**
**22.09.84 DE 3434899**

(43) Veröffentlichungstag der Anmeldung:
**19.06.85 Patentblatt 85/25**

(45) Bekanntmachung des Hinweises auf die Patenterteilung:
**06.04.88 Patentblatt 88/14**

(84) Benannte Vertragsstaaten:
**AT CH DE FR GB IT LI SE**

(56) Entgegenhaltungen:
**WO-A-82/01205**
**DE-A-2 104 745**
**DE-A-3 237 184**
**FR-A-2 041 833**
**FR-A-2 280 013**
**GB-A-643 615**
**GB-A-1 244 057**
**GB-A-2 134 074**
**US-A-2 748 236**
**US-A-4 210 796**
**US-A-4 218 166**
**US-A-4 356 554**

(73) Patentinhaber: **KUKA Schweissanlagen & Roboter GmbH, Blücherstrasse 144, D-8900 Augsburg (DE)**

(72) Erfinder: **Hartmann, Georg, Johannesstrasse 23, D-8890 Aichach (DE)**
Erfinder: **Wiedemann, Kurt, Pranthochstrasse 1, D-8900 Augsburg (DE)**
Erfinder: **Zimmer, Ernst, Michael Steinherr Strasse 34, D-8904 Friedberg (DE)**

(74) Vertreter: **Ernicke, Hans- Dieter, Dipl.- Ing., Schwibbogenplatz 2b, D-8900 Augsburg (DE)**

EP 0 144 602 B1

**Beschreibung**

Die Erfindung bezieht sich auf eine Haltevorrichtung für die Versorgungsleitungen von bewegten Werkzeugen an Manipulatoren nach dem Oberbegriff des Hauptanspruches.

Den bewegten Werkzeugen eines Manipulators müssen Energie, Strom-, Kühl-, Druckmittel oder dergleichen zugeführt werden. Diese Versorgung erfolgt über mehrere Leitungen, die als Stromleitungen, Schläuche, Druckrohre oder dergleichen ausgebildet sein können. Bei Manipulatoren besteht das generelle Problem, wie diese Versorgung sichergestellt werden kann, auch wenn das Werkzeug beliebige Bewegungen im Raum ausführt.

Aus der DE-A-22 27 288 ist es bekannt, die Versorgungsleitungen von einem externen festen Punkt aus in einer großen, freihängenden Schlaufe dem Werkzeug direkt zuzuführen. Diese Art der Zuführung hat allerdings den Nachteil, daß die Leitungsschlaufe mit dem Werkzeug im Raum herumbewegt wird und dabei erheblichen Torsions- und Biegebelastungen ausgesetzt ist. Eine solche Leitungszuführung läßt sich außerdem bestenfalls für Roboter oder Manipulatoren mit kleinem Arbeitsbereich verwenden. Sobald ein Manipulator seinen Auslegerarm jedoch über den Kopf schwenken kann, müßten die Leitungsschlaufen so groß werden, daß sie in stetige Gefahr geraten, irgendwo hängen zu bleiben oder sogar abgequetscht zu werden.

Aus der nächstliegenden DE-A-32 37 184 ist eine demgegenüber verbesserte Leitungsführung bekannt. Die Versorgungsleitung wird hier von außen in einer freihängenden Schlaufe auf das rückwärtige Ende des Manipulatorauslegers geleitet und von dort in drehbaren Halterungen entlang des Auslegers bis zum Werkzeug geführt. Nachdem aber die Drehachsen der Halterungen quer zu den Schwenkachsen der Manipulatorteile verlaufen, besteht hier ebenfalls die Gefahr einer Quetschung oder eines Bruchs der Versorgungsleitungen bei Überkopfschwenks des Manipulators.

Die US-A-4 356 554 zeigt einen mehrgliedrigen Manipulator mit seitlich geführten Leitungen. Hierbei handelt es sich zum einen um stationäre Versorgungsleitungen für die Antriebe des Auslegers, die außerdem in ortsfesten Kabelklemmen starr befestigt sind. Damit ergeben sich die gleichen Probleme mit der eingeschränkten Bewegungsfreiheit des Manipulators und mit der Belastung der Versorgungsleitungen.

Es ist daher Aufgabe der vorliegenden Erfindung, eine Haltevorrichtung für die Versorgungsleitungen von Manipulatorwerkzeugen zu entwickeln, die die Versorgungsleitungen schont und beliebigen Raumbewegungen des Werkzeugs behinderungsfrei folgen kann.

Die Erfindung löst diese Aufgabe bei einer gattungsgemäßen Haltevorrichtung mit den Merkmalen im Kennzeichnungsteil des Hauptanspruchs. Die erfindungsgemäße Haltevorrichtung gestattet beliebige Bewegungen der einzelnen Manipulatorbaugruppen ohne Beeinträchtigung der Versorgungsleitungen. Durch die koaxiale und unmittelbar benachbarte Anordnung der Halterungsdrehachsen gegenüber den Manipulatorachsen können die Versorgungsleitungen allen Manipulatorbewegungen folgen. Die Leitungsführung erfolgt dabei seitlich und zumindest entlang der Schwinge und des Auslegers, um überkopfschwenks des Manipulators zu ermöglichen. Eine maximale Bewegungsfreiheit ergibt sich, wenn die Versorgungsleitungen vom Grundgestell aus entlang des Manipulators geführt sind.

Die drehbare Befestigung der Halterungen im Achsenbereich hat weiter den Vorteil, daß diese Stellen gegenüber Relativbewegungen benachbarter Baugruppen relativ in Ruhe sind. Damit wird nur der zwischen der bewegten und der benachbarten Baugruppe befindliche Leitungsabschnitt mitbewegt. Die restlichen Leitungsabschnitte bleiben in relativer Ruhe und werden höchstens durch eine kleine Drehung der Halterung nachgeführt. Hierdurch werden auch die dynamischen Belastungen des Manipulators und der Versorgungsleitungen vermindert.

Die Halterungen können in unterschiedlicher Weise, z. B. als Trennleisten oder dergleichen, ausgebildet sein. Besonders vorteilhaft ist aber die erfindungsgemäße Halterung in Gestalt eines rohrförmigen Gehäuses mit einem darin geführten Einsatz, der die Leitungen zusammenhält. Diese Halterung ermöglicht nämlich neben einer schonenden Führung der Versorgungsleitungen auch mittels eines Schnellspannverschlusses einen raschen Austausch einzelner Leitungen oder des gesamten Leitungsbündels bei einem Werkzeugwechsel. Dabei können die Einsätze mit den Leitungen verbunden bleiben und komplett gegen neue Leitungen mit eigenen Einsätzen ausgetauscht werden.

Die Einsätze selbst sind in den Halterungen in Leitungsrichtung kraft- und/oder formschlüssig geführt. In Umfangsrichtung kann dagegen die Führung fest oder lose sein. Eine lose Führung in Verbindung mit kreisrunden Einsätzen und Halterungen ermöglicht ein Verdrehen der Einsätze in den Halterungen um die Leitungsachse. Auf diese Weise kann das Leitungsbündel entsprechenden Drehbewegungen der Manipulatorhand ohne Zwängung folgen. Eine lose Führung läßt sich dabei durch entsprechendes Spiel zwischen Halterung und Einsatz oder auch durch eine spezielle Lagerung, z. B. mittels Gleitringen, realisieren.

Die Einsätze weisen, je nach Ausgestaltung, peripher offene, als Clipshalterung ausgebildete Bohrungen auf oder sind trenn- bzw. aufklappbar gestaltet. Damit können einzelne, beispielsweise defekte Leitungen schnell ausgetauscht oder neue, zusätzliche Leitungen an den Einsätzen angebracht werden, ohne daß das übrige Leitungsbündel davon betroffen ist.

Die Einsätze selbst können je nach Art der Versorgungsleitungen unterschiedlich, beispielsweise als kreisrunde Scheibe, als langer Rohrkörper oder als scheibenförmiger Ansatz mit Führungstüllen ausgebildet sein. Der scheibenförmige Einsatz ist für die Aufnahme einzelner Leitungen gedacht. Durch seine mehrteilige Ausbildung sind die Leitungen dicht beieinander in einem kompakten Bündel geführt und damit der neutralen Achse eng benachbart. Dies wirkt sich besonders bei Bündeln mit vielen Leitungen aus und hat zur Folge, daß alle Leitungen bei einer Biegung des Leitungsbündels stets den ungefähr gleichen Krümmungswinkel besitzen. Dadurch wird auch ein Knicken der Leitungen vermieden.

Zum Lichtbogenschweißen werden relativ weiche Versorgungsleitungen verwendet, für die sich rohrförmige Einsätze besonders eignen. Die Leitungen werden gebündelt, als kompaktes umhülltes Schlauchpaket in diesen nachgiebigen rohrförmigen Einsätzen geführt, die durch ihre Führungslänge scharfe Knickstellen, die für weiche Schläuche besonders gefährlich sind, verhindern. Für andere Zwecke können diese Einsätze auch aus steiferem Material bestehen.

Der scheibenförmige Ansatz in Kombination mit den Führungstüllen ermöglicht neben der Aufnahme eines Leitungsbündels oder Schlauchpaketes das zusätzliche Anbringen von Einzelleitungen, die in peripher zugängliche Bohrungen des Ansatzes eingeclipst werden.

Die beiden Arten von rohrförmigen Einsätzen weisen zur schnellen Aufnahme des Leitungsbündels oder Schlauchpaketes eine längslaufende Trennfuge auf, die ein Aufbiegen oder Auseinandernehmen der Einsätze gestattet. Mittels Spannbändern und dergleichen oder durch Verkleben werden die rohrförmigen Einsätze wieder geschlossen.

Die weiteren Unteransprüche betreffen vorteilhafte Ausgestaltungen der Erfindung.

Die Erfindung ist in der Zeichnung beispielsweise und schematisch dargestellt. Es zeigt:

Fig. 1 eine Seitenansicht eines Manipulators mit seinen Baugruppen und der zugehörigen Versorgungsleitung,

Fig. 2 einen Längsschnitt durch ein rohrförmiges Gehäuse zur Aufnahme des Leitungsbündels,

Fig. 3 eine Seitenansicht eines vom rohrförmigen Gehäuse eingespannten scheibenförmigen Einsatzes,

Fig. 4 einen Längsschnitt durch den Einsatz entsprechend der Linie IV-IV gemäß Fig. 3,

Fig. 5 eine Seitenansicht eines an einem nachgiebigen Arm angeordneten rohrförmigen Gehäuses,

Fig. 6 eine Seitenansicht eines mehrteiligen, scheibenförmigen Einsatzes,

Fig. 7 einen Einsatz in Variation zu Fig. 6,

Fig. 8 einen Längsschnitt durch den mehrteiligen Einsatz entsprechend der Linie VIII-VIII gemäß Fig. 7,

Fig. 9 einen Längsschnitt durch eine Halterung mit einem rohrförmigen Einsatz,

Fig. 10 einen Querschnitt durch einen rohrförmigen Einsatz entsprechend der Linie X-X gemäß Fig. 9,

Fig. 11 einen Längsschnitt durch eine Halterung mit einem rohrförmigen Einsatz in Variation zu Fig. 9 und 10,

Fig. 12 einen Querschnitt durch einen rohrförmigen Einsatz entsprechend der Linie XII-XII gemäß Fig. 11 und

Fig. 13 eine Seitenansicht eines scheibenförmigen Einsatzes in Variation zu Fig. 6.

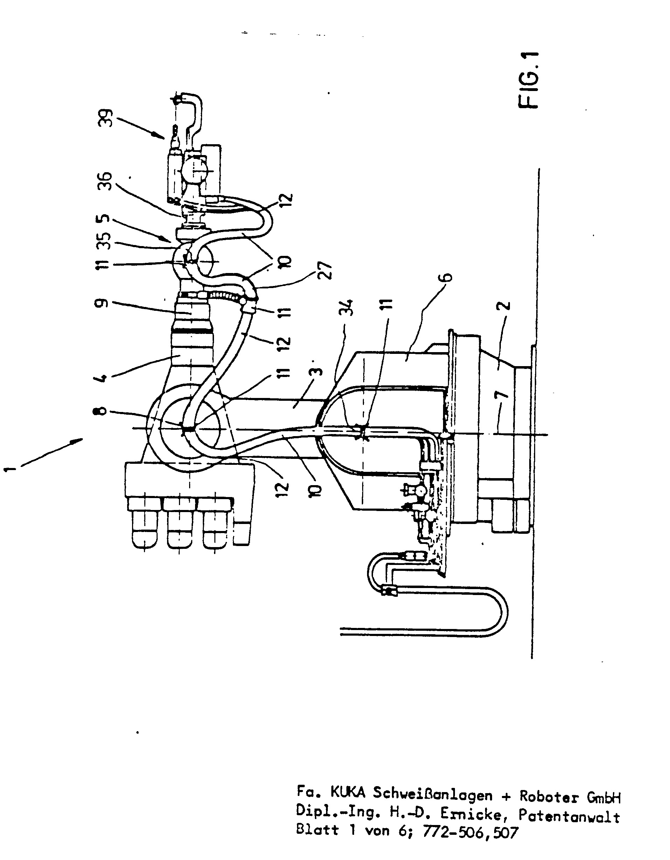

Im Ausführungsbeispiel der Fig. 1 ist ein Manipulator 1 in Seitenansicht dargestellt. Ein solcher Manipulator 1 weist verschiedene, relativ zueinander bewegliche Baugruppen auf. Im dargestellten Ausführungsbeispiel handelt es sich um einen Sechs-Achsen-Manipulator; bestehend aus einem ortsfesten Grundgestell 2, einem daran um eine vertikale Achse 7 drehbaren Karussell 6, einer daran um eine horizontale Achse 34 drehbaren Schwinge 3, einem daran um eine horizontale Achse 8 schwenkbaren Ausleger 4 und einer am Ende des Auslegers 4 in verschiedener Weise gelenkig angeordneten Hand 5. Diese Hand 5 trägt ein Werkzeug 39, das im Ausführungsbeispiel als Schweißwerkzeug ausgebildet ist. Stattdessen kann auch ein anderes Werkzeug, beispielsweise ein Wasserschneider, eine Spritzpistole, ein Radgreifer mit Schrauber, eine Bohrvorrichtung oder dgl. an der Hand 5 angebracht sein. Im dargestellten Ausführungsbeispiel kann die Hand 5 um die längs des Auslegers 4 verlaufende Achse 9 drehen und um eine quer dazu verlaufende Achse 35 schwenken. Das Werkzeug 39 ist gegenüber der Hand 5 um eine weitere Achse 36 drehbar angeordnet. Je nach Art des Werkzeugs können weitere Bewegungsmöglichkeiten gegeben sein.

Das Schweißwerkzeug benötigt die Zufuhr von Energie und Betriebsmitteln in verschiedener Form. In erster Linie handelt es sich um elektrischen Strom, Kühl- und Druckmittel oder dgl. Besitzt das Werkzeug eine eigenständige Beweglichkeit und entsprechende Antriebe, müssen auch diese versorgt werden. Sofern an Stelle des Schweißwerkzeuges andere Werkzeuge verwendet werden, ändern sich die benötigte Energie und die Betriebsmittel entsprechend.

Im Beispiel der Fig. 1 erfolgt die Zufuhr von Energie zum Werkzeug 39 über ein Bündel von Versorgungsleitungen 10, welches extern am Manipulator 1 angeordnet ist. Von einem solchen Leitungsbündel 10 wird erwartet, daß dieses die unterschiedlichsten Bewegungen der Baugruppen 2 bis 6 durchzuführen gestattet, weshalb das Leitungsbündel 10 in Halterungen 11 geführt und zwischen den Halterungen 11 in Schlaufen 12 gelegt ist. Diese Schlaufen 12 sorgen dafür, daß das Leitungsbündel 10 den einzelnen Bewegungen der Baugruppe folgen kann.

Die Halterungen 11 sind ihrerseits drehbar im Bereich der Manipulatorachsen an den Baugruppen gelagert. Im Ausführungsbeispiel der Fig. 1 sind die Halterungen 11 auf den Lagerschilden oder anderen relativ in Ruhe befindlichen Teilen des Karussells 6, der Schwinge 3 und der Hand 5 angeordnet und zwar so, daß die Drehachse der Halterungen 11 mit den Manipulotarachsen 35, 8 u. 34 zusammenfällt. Je nach den maschinellen Gegebenheiten anderer Manipulatoren können die Halterungen auch etwas von den genannten Achsen entfernt angeordnet sein.

Die Auswirkung dieser Halterungsanordnung sei im folgenden kurz an einem Beispiel erläutert:

Soll das Werkzeug 39 aus seiner in Fig. 1 dargestellten Position senkrecht nach oben geschwenkt werden, dreht sich der Ausleger 4 um die Achse 8 gegenüber der Schwinge 3. Dieser Schwenkbewegung folgen auch die Schlaufen 12 längs des Auslegers 4 und der Hand 5. Die Länge der Schlaufen 12 ändert sich dabei nicht, lediglich die Halterungen 11 drehen sich etwas mit und sorgen damit dafür, daß das Leitungsbündel 10 vor einem Knicken bewahrt wird und stattdessen in einer belastungsgünstigen Bogenlinie entlang der Manipulatorbaugruppen 2 bis 6 verläuft.

Die Schlaufen 12 sorgen des weiteren dafür, daß sich beispielsweise die Hand 5 um die Achse 9 drehen kann und das Leitungsbündel 10 in der Lage ist, dieser Drehbewegung zu folgen. Auch bezüglich der Achsen 7, 9 und 36 ist es günstig, wenn die Halterungen 11 möglichst nahe an diesen Achsen sitzen, weil damit auch der Schwenkweg der Halterung bei einer Drehung um diese Achsen verkleinert wird und damit auch die Schlaufen 12 kürzer sein können. Dem Karussell 6 wird das Leitungsbündel 10 von außen ebenfalls in einer Drehbewegungen erlaubenden Schlaufe zugeführt.

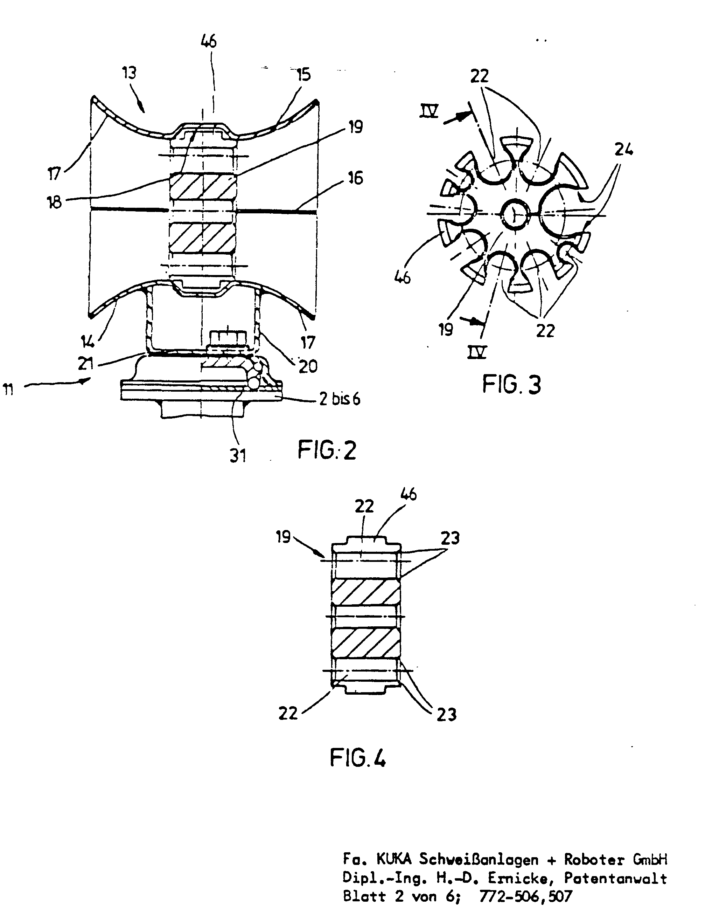

Gemäß dem Ausführungsbeispiel der Fig. 2 besteht die einzelne Halterung 11 für das Leitungsbündel 10 aus einem rohrförmigen Gehäuse 13, welches ein festes Teil 14 und mindestens ein bewegliches Teil 15 umfaßt, die durch die Trennfuge 16 voneinander getrennt sind. Beide Teile 14, 15 weisen trichterförmige Erweiterungen 17 auf und enthalten eine Fassung 18, in welche ein Einsatz 19 einspannbar ist. Die Raumform dieses Einsatzes ergibt sich in verschiedenen Varianten aus den Figuren 3, 4 und 6 bis 13. Maßgeblich zu Figur 2 ist, daß ein Einsatz 19 austauschbar im rohrförmigen Gehäuse 13 eingespannt werden kann. Die Einsätze 19 können hinsichtlich der Anzahl und des Durchmessers der Bohrungen variieren. Der feste Teil 14 des rohrförmigen Gehäuses 13 ist beim Ausführungsbeispiel mit einem Ansatz 20 fest verbunden. Dieser Ansatz 20 wird über einen Flansch 21 und ein Lager 31, vorzugsweise ein einfaches Kugellager, drehbar mit jeweils einer der in Figur 1 dargestellten Baugruppen 2 bis 6 verbunden.

Der Einsatz 19 dient dazu, die einzelnen Leitungen des Leitungsbündels 10 ortskonstant und parallel zueinander aufzunehmen und damit eine gewisse Zentrierung des Leitungsbündels 10 herbeizuführen. Da das Leitungsbündel 10 aufgrund der Relativbeweglichkeit der Baugruppen 2 bis 6 eine gewisse Eigenbeweglichkeit haben muß, weist, wie in Figur 2 dargestellt, das rohrförmige Gehäuse beidseitig eine trichterförmige Erweiterung 17 auf, welche bei einer Abbiegung des Versorgungsbündels 10 dieses in eine sanfte Krümmungslinie legt und ein Knicken verhindert. (vgl. Figur 1).

Der in das rohrförmige Gehäuse 13 quer zu dessen Längsachse eingespannte scheibenförmige Einsatz 19, der in den Fig. 3, 4, 6, 7, 8 und 13 dargestellt ist, weist Bohrungen, Ausnehmungen o.dgl. 22 auf, die hauptsächlich peripher angeordnet sind. Die Stirnseiten der Bohrungen 22 sind mit Abschrägungen 23 (siehe Fig. 4) versehen. Die Bohrungen 22 dienen dazu, die einzelnen Leitungen des Leitungsbündels 10 zentriert aufzunehmen.

Im Beispiel der Figur 3 ist dargestellt, daß die Bohrungen 22 peripher angeordnet sind. Dies setzt voraus, daß ein radialer Zugang 24 vargesehen sein muß, um die einzelnen Leitungen von außen her in die Bohrungen 22 einsetzen zu können. Die Leitungen sind je nach ihrem Zweck unterschiedlich dick, weshalb auch die Bohrungen 22 unterschiedliche Durchmesser aufweisen. Von Werkzeug zu Werkzeug kann die Zahl und Dicke der benötigten Versorgungsleitungen sich ändern. Je nachdem, wo die einzelnen Leitungen am Werkzeug angeschlossen sind, kann sich auch ihre Verteilung im Leitungsbündel ändern.

Um die einzelnen Leitungen im Einsatz 19 zu halten, weisen die Bohrungen 21 einen verengten Zugang 24 auf. In Verbindung mit den meistens mit einem elastischen Material umhüllten Leitungen entsteht dadurch eine Clipsverbindung, die ein unbeabsichtigtes Herausfallen der Leitungen verhindert. Wie aus den Figuren 2 und 4 erkennbar, weist der Einsatz 19 in Umfangsrichtung einen stufenförmigen Ansatz 46 auf, über den er formschlüssig in der Fassung 18 des Gehäuses 13 geführt ist.

Der Einsatz 19 von Figur 3 erlaubt nur eine beschränkte Packungsdichte des Leitungsbündels 10. In die in seinem Zentrum angeordnete Bohrung kann eine weitere Versorgungsleitung durch Auffädeln des Einsatzes 19 eingezogen werden.

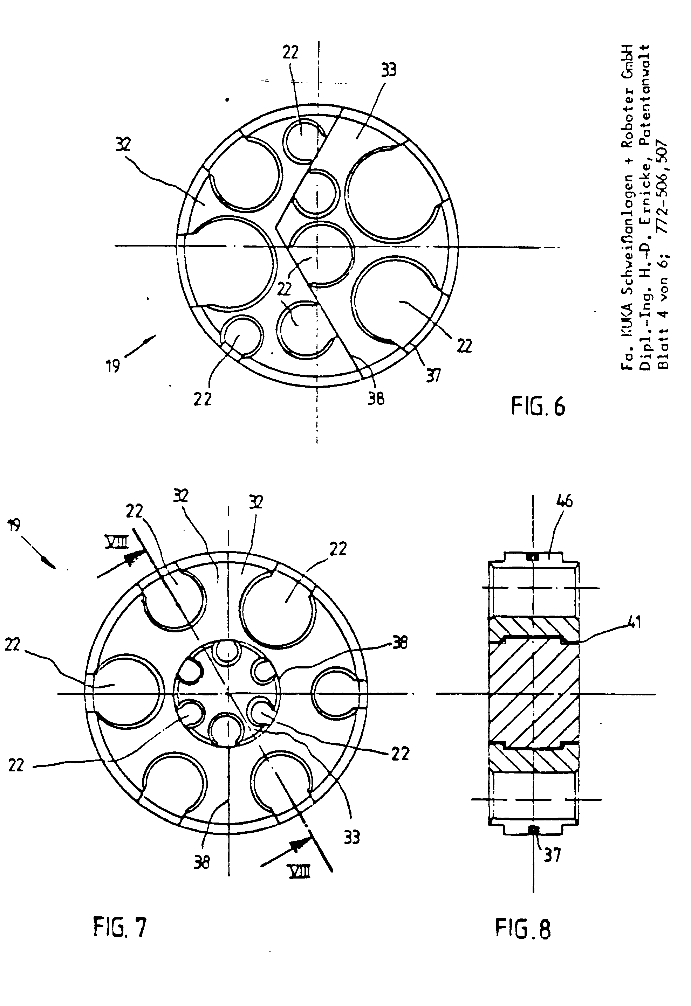

Die Ausführungsbeispiele der Figuren 6 bis 8 zeigen eine Möglichkeit zur Erhöhung der Packungsdichte ohne Verzicht auf die schnelle Verbindungsmöglichkeit zwischen Einsatz und Versorgungsleitungen ( = periphere Bohrungen). In Figur 6 besteht der scheibenförmige Einsatz 19 aus zwei Teilen 32, 33, die an einer Trennlinie 38 im zusammengefügten Zustand passend zusammenstoßen. Im getrennten Zustand stellt die Trennungslinie 38 für jeden Einsatzteil 32, 33 einen neuen peripherischen Bereich zur Aufnahme weiterer Bohrungen 12 dar. Nach dem Einclipsen der Leitungen werden die Einsatzteile 32, 33 zusammengefügt. Zur Bildung einer formschlüssig zusammengehaltenen Scheibe werden die Einsatzteile 31, 33 außenseitig durch einen Sprengring 37 oder dgl. zusammengehalten. Der Sprengring 37 kann dabei in einer umfänglich eingedrehten Nut versenkt sein. Entlang der Trennlinie 38 können die Bohrungen 22 in den einzelnen Teilen 32, 33 auch einander gegenüberliegen.

Figur 7 zeigt eine weitere Variation des scheibenförmigen Einsatzes 19, der hier insgesamt aus drei Teilen besteht. Das Einsatzteil 32 ist zweigeteilt, wobei seine beiden Hälften das zentrisch angeordnete weitere Einsatzteil 33 umschließen und in einer formschlüssigen Verbindung führen. Der Umfang des Einsatzteiles 33 bildet in diesem Auhführungsbeispiel die Trennlinie 38. Das Einsatzteil 33 weist an seinem Umfang Bohrungen 22 auf. In Variation zum dargestellten Ausführungsbeispiel können auch die Einsatzteile 32 im Bereich der Trennlinie 38 Bohrungen 12 aufweisen. Die Einsatzteile 32, 33 können analog zu Figur 6 durch einen Sprengring oder ein anderes umfängliches Spannelement zusammengehalten sein. Desgleichen ist es aber auch möglich, die Hälften des Einsatzteiles 32 durch eine Clipsverbindung entlang ihrer Trennlinie zusammenzuhalten.

In Fig. 8 ist der in eine Umfangsnut eingelegte Sprengring 37 und eine formschlüssige Verbindung 41 der Teile 32, 33 miteinander zu sehen.

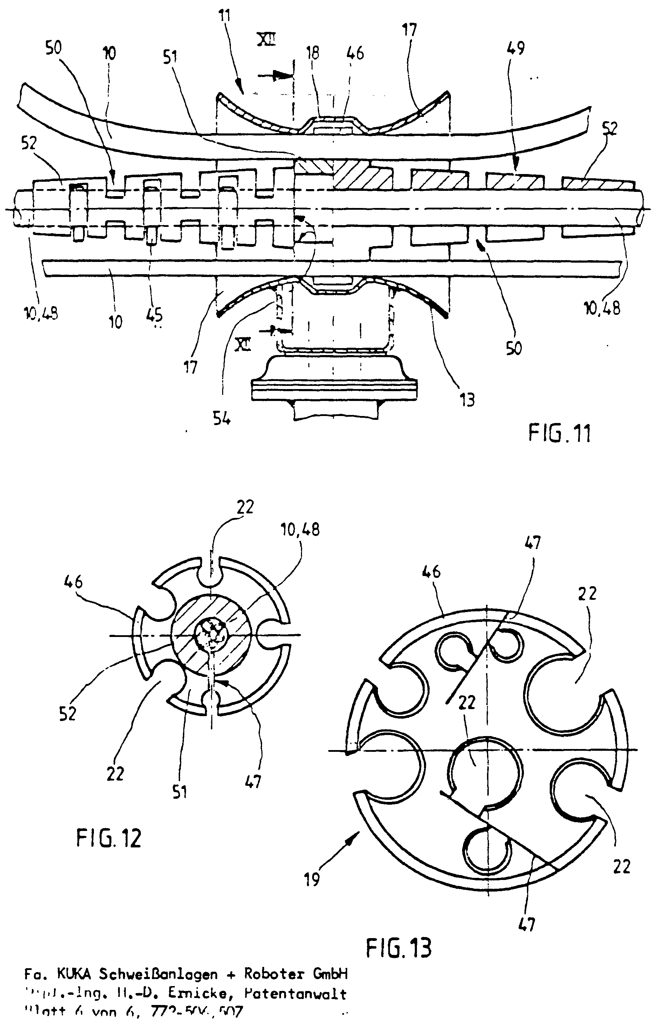

Fig. 13 zeigt eine Variation zu Fig. 6. In diesem Fall weist der scheibenförmige Einsatz 19 ebenfalls innenliegende Bohrungen 22 auf, die vom Scheibenumfang her nicht ohne weiteres zugänglich sind. Der scheibenförmige Einsatz 19 besteht in diesem Ausführungsbeispiel aus einem elastischen Material, vorzugsweise Kunststoff, und besitzt zwei, vom Scheibenumfang aus nach innen verlaufende Trennfugen 47, an die die innenliegenden Bohrungen 22 angrenzen. Entlang dieser Trennfugen 47 kann der scheibenförmige Einsatz 19 aufgebagen werden, wodurch die innenliegenden Bohrungen 22 zum Einclipsen von Leitungen erreichbar sind. Durch die Elastizität des Materials schließt sich die Trennfuge 47 selbsttätig. Außerderm wird der scheibenförmige Einsatz 19 im eingebauten Zustand von der Fassung 18 in Umfangsrichtung zusammengehalten.

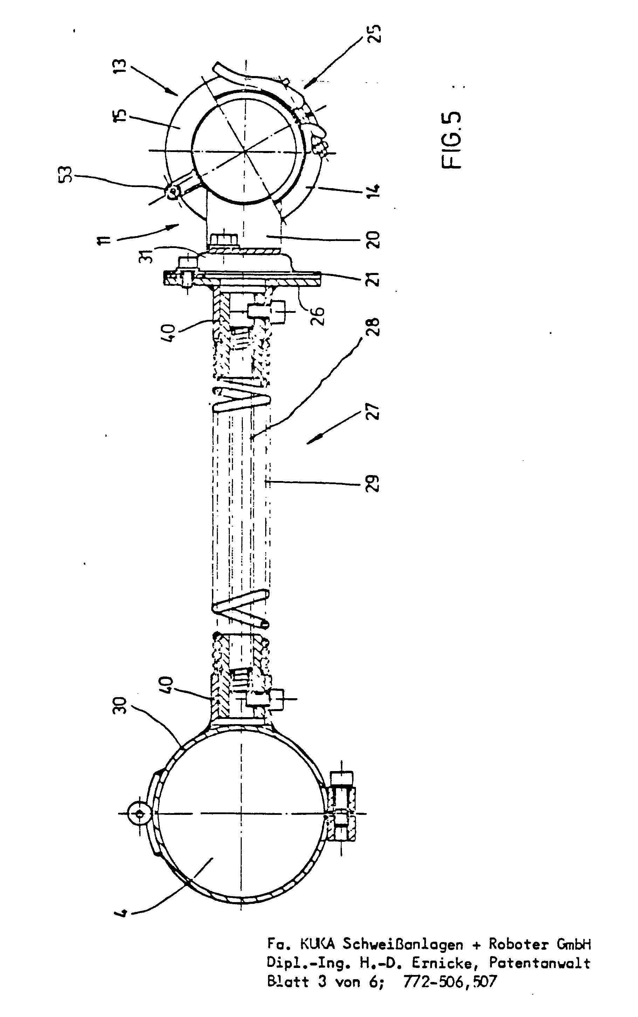

Die Führung der Versorgungsleitungen 10 in mehreren Halterungen 11 (vgl. Fig. 1), ist nur dann sinnvoll, wenn die Versorgungsleitungen 10 bei Austausch des Werkzeuges und/oder des Leitungsbündels schnell aus den Halterungen 11 entnommen werden können. Zu diesem Zweck sieht die Erfindung vor, das rohrförmige Gehäuse 13 mehrteilig auszubilden und die einzelnen Teile 14, 15 über einen Schnellspannverschluß 25 und einem handelsüblichen Scharnier 53 (vgl. Fig 5) miteinander zu verbinden. Dieser Schnellspannverschluß 25 kann beispielsweise aus einem üblichen Knebelverschluß bestehen. Bei geöffnetem Gehäuse 13 kann das Leitungsbündel 10 samt seiner spezifischen Einsätze 19 entnommen werden und gegen ein anderes Leitungsbündel mit bereits aufgeclipsten neuen spezifischen Einsätzen ausgetauscht werden. Die Clipsverbindung erlaubt es dabei, die jeweiligen Einsätze an ihrem Leitungsbündel zu belassen.

Die Halterung 11 kann an einer oder mehreren der Manipulatorbaugruppen 2 bis 6 angeordnet sein, wobei es sich allerdings empfiehlt, jeder Baugruppe nur jeweils eine Halterung zuzuordnen. Neben der direkten Befestigung an den Baugruppen sieht die Erfindung des weiteren noch vor, entsprechend dem Ausführungsbeispiel der Fig. 1 und 5 eine Halterung 11 auch an einem elastischen Arm 27 drehbar anzuordnen. Der Arm 27 ist seinerseits an einer Baugruppe, hier der Ausleger 4, befestigt und dient dazu, die Schlaufe 12 abzuhalten und bei einer Verdrehung der Hand 5 um die Achse 9 nachzuführen.

Im Ausführungsbeispiel der Fig. 5 ist die Halterung 11 wiederum über ein in Fig. 2 näher dargestelltes Lager 31 drehbar mit dem Flansch 21 des elastischen Armes 27 verbunden. Die Halterung 11 kann sich hierdurch ebenfalls auf die ideale, belastungsgünstigste Bogenlinie der Schlaufe 12 bzw. des Leitungsbündels 10 einstellen. Der Arm 27 wird im gezeigten Ausführungsbeispiel durch zwei Schraubenfedern 28, 29 gebildet, welche mit einem Spanngehäuse 30 verbunden sind, das den Ausleger 4 oder eine andere Manipulatorbaugruppe fest umgreift. Die beiden ineinander angeordneten Schraubenfedern 28, 29 sorgen für eine stabile, aber nachgiebige Führung der Halterung 11 und damit des Leitungsbündels 10. Die Halterung 11 ist dabei gegenüber dem Spanngehäuse 30 um die Achse des Armes 27 drehbar. Die äußere Schraubenfeder 29 ist in entsprechende Gewindegänge auf Ansätzen 40 des Spanngehäuses 30 und des Flansches 26 aufgeschraubt. Die Ansätze 40 sind hohl und führen in sich die innere Feder 28, die in Längsrichtung durch eingedrehte Schrauben gehalten ist.

Um die Elastizität des Armes 27 dem jeweiligen Leitungsbündel anzugleichen, ist vorgesehen, den Arm 27 auch ohne die Schraubenfeder 28 auszuführen. Es liegt auf der Hand, die Halterung 11 im Sinne der Erfindung auch auf andere Weise mit den entsprechenden Baugruppen eines Manipulators relativ beweglich zu verbinden.

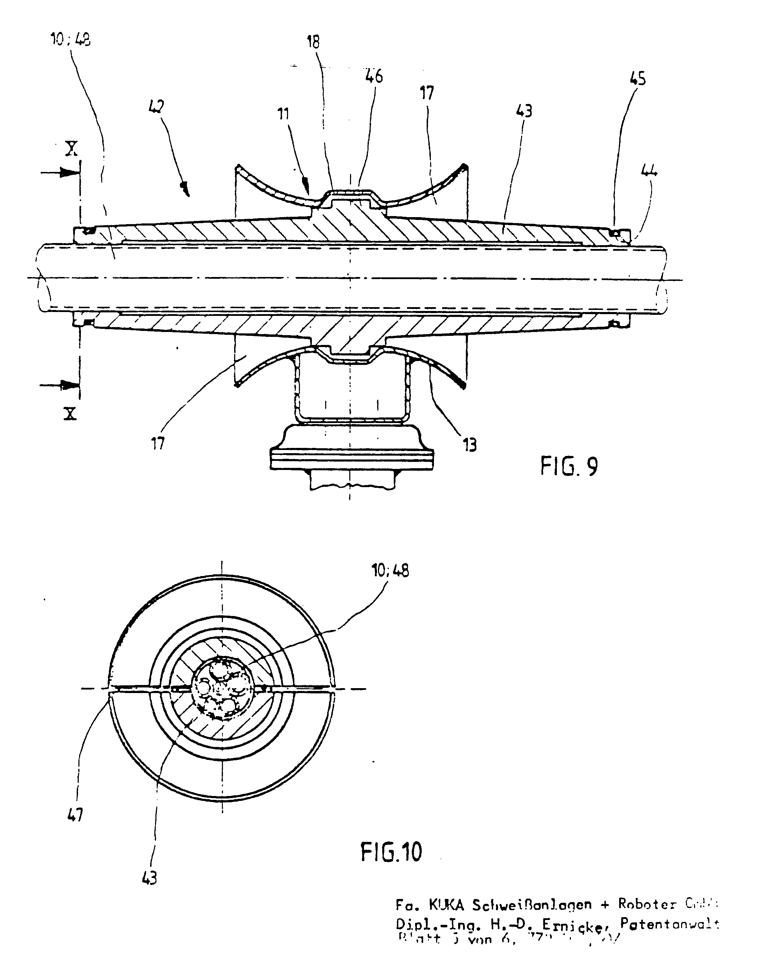

Fig. 9 zeigt eine Halterung 11 mit einem anderen Einsatz 42 im Längsschnitt. Der Einsatz 42 ist als Rohrkorper 43 ausgebildet und umfaßt ein Leitungsbündel 10 oder ein Schlauchpaket 48, wie es vorzugsweise bei Lichtbogenschweißwerkzeugen Verwendung findet. Das Paket 48 aus weichen Schläuchen wird von einer Hülle zusammengehalten. Der Rohrkörper 43 besitzt entsprechend der Knickempfindlichkeit des Schlauchpaketes 48 eine große Führungslänge und ragt vorn und hinten über das Gehäuse 13 der Halterung 11 vor. Der Rohrkörper 43 besteht aus elastischem Material, z. B. Kunststoff oder Gummi, und weist eine von beiden Seiten zur Mitte hin konisch ansteigende Form auf. Bei Belastung legt sich der Rohrkörper 43 in einen, das empfindliche Schlauchpaket 48 schützenden, weichen Bogen. In der Mitte weist der Rohrkörper 43 einen umlaufenden, stufenförmigen Ansatz 46 auf, mittels dem er in der Fassung 18 des Gehäuses 13 in Leitungsrichtung formschlüssig geführt ist.

Der stufenförmige Ansatz 46 der verschiedenen Einsätze kann in der Fassung 18 in Umfangsrichtung kraftschlüssig geführt sein, so daß der im Gehäuse 13 eingespannte Einsatz nach allen Richtungen hin fest geführt ist. Daneben ist es aber auch möglich, den Einsatz im Gehäuse 13 in Umfangsrichtung lose zu führen, so daß er sich mit seinem Leitungsbündel gegenüber dem Gehäuse 13 um die Leitungslängsachse drehen kann. Dazu ist der stufenförmige Ansatz 46 in Umfangsrichtung mit Spiel in der Fassung 18 geführt. In Variation dazu ist es auch möglich, eine spezielle Lagerung zwischen dem Ansatz 46 und der Fassung 18, beispielsweise in Form von Gleitringen, vorzusehen. Voraussetzung hierfür ist im weiteren, daß entsprechend den Ausführungsbeispielen der stufenförmige Ansatz 46 und die Fassung 18 eine kreisrunde Form besitzen. Daneben können Gehäuse 13, Fassung 18, die verschiedenen Einsätze 19, 42, 49 sowie der Ansatz 46 aber auch eine beliebige andere Querschnittsform besitzen.

Der Rohrkörper 43 ist gemäß Fig. 10 durch eine Trennfuge 47 längsgeteilt und läßt sich zum Austausch des Schlauchpaketes 48 dank seiner Elastizität aufklappen. Der Rohrkörper 43 kann auch mehrfach geteilt und mit Scharnieren versehen sein. Im Betrieb wird der Rohrkörper 43 durch Spannbänder, Ringe oder dgl. 45 zusammengehalten, die in stirnseitige Ringnuten 44 eingelegt sind.

In Fig. 11 und 12 ist ein weiterer rohrförmiger Einsatz 49 in Variation zu demjenigen der Fig. 9 und 10 dargestellt. Der Einsatz 49 besteht aus einem scheibenförmigen Ansatz 51 und zwei daran angrenzenden Führungstüllen 52. Der scheibenförmige Ansatz 51 ist über eine Schulter 46 in der Fassung 18 des Gehäuses 13 formschlüssig geführt. Die Tüllen 52 sind mit dem scheibenförmigen Ansatz 51 verbunden. Der Einsatz 49 kann dabei einteilig (rechte Hälfte von Fig. 11) oder mehrteilig ausgebildet sein. Bei mehrteiliger Ausbildung sind die Führungstüllen 52 über eine formschlüssige Verbindung 54 (dargestellt in linker Hälfte von Fig. 11) om scheibenförmigen Ansatz 51 gehalten. Entsprechend Fig. 11 sind die Führungstüllen 52 als ein Teil ausgebildet, das mittig eine Ringnut aufweist. Der scheibenförmige Ansatz 51 ist entsprechend dem Einsatzteil 32 aus Fig. 7 ausgebildet und halb oder voll geteilt. Der Tüllenkörper 52 wird dann mit seiner Nut in die zentrale Bohrung des scheibenförmigen Ansatzes 51 eingelegt oder eingeclipst. Daneben können die Führungstüllen 52 aber auch als Einzelteile formschlüssig mit dem scheibenförmigen Ansatz 51 verbunden werden.

Im Einsatz 49 ist mittig ein Leitungsbündel 10 oder ein Schlauchpaket 48 geführt. Der scheibenförmige Ansatz 51 weist dabei zusätzlich am Umfang von außen zugängliche, als Clipshalterung ausgebildete Bohrungen 22 zur Aufnahme weiterer zusätzlicher Leitungen 10 auf. Diese Leitungen 10 sind beispielsweise von einem Versorgungsteil kommend, anfangs frei geführt und später wieder in das Schlauchpaket 48 eingeführt.

Die Führungstüllen 52 weisen an sich bekannte, abwechselnd und verdreht angeordnete Ausnehmungen 50 zur Erhöhung der Elastizität auf. Die Führungstüllen 52 haben insoweit die gleiche Aufgabe wie der Rohrkörper 43.

Zum Einlegen des Schlauchpaketes 48 ist der Einsatz 49 mit einer längsverlaufenden Trennfuge 47 versehen. Im gezeigten Ausführungsbeispiel der Fig. 12 ist der Einsatz 49 einteilig ausgebildet und besteht aus einem elastischen Werkstoff. Die Trennfuge 47 reicht dann einseitig nur bis zur Mitte des Einsatzes 49 und ermöglicht ein elastisches Aufbiegen des Einsatzes. Daneben kann der Einsatz 49 auch entsprechend dem Ausführungsbeispiel der Fig. 9 und 10 voll geteilt sein. Bei mehrteiliger Ausbildung des Einsatzes 49 ergeben sich entsprechende Gestaltungsmöglichkeiten für den scheibenförmigen Ansatz 51 aus den Ausführungsbeispielen der Fig. 6 bis 8. Die Führungstüllen 52 werden an der Trennfuge 47 entsprechend dem Ausführungsbeispiel der Fig. 11 durch Spannbänder 45 zusammengehalten. In Variation dazu können sie aber auch miteinander verklebt sein.

## Patentansprüche

1. Haltevorrichtung für die Versorgungsleitungen von bewegten Werkzeugen an Manipulatoren, bei der die Versorgungsleitungen (10) entlang zumindest einer bewegten Baugruppe (2, 3, 4, 5, 6) des Manipulators (1) in einer oder mehreren Halterungen (11) gebündelt geführt sind, wobei die Halterungen (11) jeweils im Bereich der Manipulatorachsen (7, 8, 9, 34, 35, 36) drehbar am Manipulator (1) befestigt sind, dadurch gekennzeichnet, daß die Halterungen (11) mit ihren Drehachsen koaxial und in unmittelbarer Nähe zu den Manipulatorachsen (7, 8, 9, 34, 35, 36) angeordnet sind und daß die Versorgungsleitungen (10) zumindest entlang der Schwinge (3) und des Auslegers (4) seitlich in Halterungen (11) an der Schwingenachse (34) und der Auslegerachse (8) geführt sind.

2. Haltevorrichtung nach Anspruch 1, dadurch gekennzeichnet, daß die Versorgungsleitungen (10) vom Grundgestell (2) ausgehend über das Karussell (6), die Schwinge (3), den Ausleger (4) und die Hand (5) zum Werkzeug (39) geführt sind.

3. Haltevorrichtung nach Anspruch 1 oder 2, dadurch gekennzeichnet, daß die Halterungen (11) ein rohrförmiges Gehäuse (13) aus zwei miteinander gelenkig verbundenen und mit einem Schnellspannverschluß (25) versehene Teile (14, 15) aufweisen, in dem ein Einsatz (19, 42, 49) für die Aufnahme der Versorgungsleitungen (10, 48) geführt ist.

4. Haltevorrichtung nach Anspruch 3, dadurch gekennzeichnet, daß das rohrförmige Gehause (13) an beiden Enden trichterförmig (17) sich erweiternd ausgebildet ist.

5. Haltevorrichtung nach Anspruch 1 und 3, dadurch gekennzeichnet, daß das rohrförmige Gehäuse (13) über ein Kugellager (31) an den Baugruppen (2, 3, 4, 5, 6) oder einem nachgiebigen, mit der Baugruppe (3, 4, 5) verbundenen Arm (27) angeflanscht ist.

6. Haltevorrichtung nach Anspruch 5, dadurch gekennzeichnet, daß der Arm (27) als Schraubenfederanordnung (28, 29) ausgebildet ist.

7. Haltevorrichtung nach Anspruch 3 oder einem der folgenden, dadurch gekennzeichnet, daß der Einsatz (42) als teilbarer, langer Rohrkörper (43) ausgebildet ist, in dem die Versorgungsleitungen (10) als Bündel oder Schlauchpaket (48) geführt sind.

8. Haltevorrichtung nach Anspruch 7, dadurch gekennzeichnet, daß der Rohrkörper (43) aus einem elastischen Material mit einer Trennfuge (47) längs einer Mantellinie besteht und an seinen Stirnenden jeweils eine Ringnut (44) zur Aufnahme eines Spannbandes (45) aufweist.

9. Haltevorrichtung nach Anspruch 7, dadurch gekennzeichnet, daß der Einsatz (19) als kreisrunde Scheibe ausgebildet ist und aus einem oder mehreren Teilen (32, 33) besteht, die jeweils in ihrem peripheren Bereich nach außen offene Bohrungen (22) mit verengter Zugangsöffnung (24) zum Einclipsen der Versorgungsleitungen (10) aufweist.

10. Haltevorrichtung nach Anspruch 9, dadurch gekennzeichnet, daß die Einsatzteile (32, 33) ineinandergeführt (41) und durch einen Sprengring (37) oder dgl. formschlüssig zusammengehalten sind.

11. Haltevorrichtung nach Anspruch 7, dadurch gekennzeichnet, daß der Einsatz (49) aus einem scheibenförmigen Ansatz (51) und zwei Führungstüllen (52) besteht, wobei im Ansatz (51) und den Tüllen (52) ein Schlauchpaket (48) geführt ist und der Ansatz (51) mindestens eine peripher zugängliche Bohrung (22) zur Führung von zusätzlichen Leitungen (10) aufweist.

12. Haltevorrichtung nach Anspruch 11, dadurch gekennzeichnet, daß der Einsatz (49) einstückig ausgebildet ist, aus elastischem Material besteht und eine längsverlaufende Trennfuge (47) aufweist, entlang derer der Einsatz (49) öffenbar ist.

13. Haltevorrichtung nach Anspruch 11, dadurch gekennzeichnet, daß der Einsatz (49) mehrteilig ausgebildet ist, wobei die Führungstüllen (52) im scheibenförmigen Ansatz (51) formschlüssig (54) geführt sind.

## Claims

1. Retaining device for the supply lines of moving tools on manipulators, in which the supply lines (10) are led in a bundled manner along at least one moving assembly (2, 3, 4, 5, 6) of the manipulator (1) in one or more holders (11), the holders (11) being pivotally fastened to the manipulator (1) in each case in the area of the manipulator axes (7, 8, 9, 34, 35, 36), characterized in that the holders (11) are arranged with their pivot axes coaxial to and in the direct vicinity of the manipulator axes (7, 8, 9, 34, 35, 36), and in that the supply lines (10) are led, at least along the rocker arm (3) and the boom (4), at the side in holders (11) on the rocker arm axis (34) and the boom axis (8).

2. Retaining device according to Claim 1, characterized in that the supply lines (10) are led, starting from the base frame (2) via the carousel (6), the rocker arm (3), the boom (4) and the hand (5) to the tool (39).

3. Retaining device according to Claim 1 or 2, characterized in that the holders (11) have a tubular casing (13) of two parts (14, 15), which are articulatedly interconnected and provided with a quick-acting closure (25), and in which an insert (19, 42, 49) for receiving the supply lines (10, 48) is guided.

4. Retaining device according to Claim 3, characterized in that the tubular casing (13) is designed as widening in funnel shape (17) at both ends.

5. Retaining device according to Claims 1 and 3, characterized in that the tubular casing (13) is flanged onto the assemblies (2, 3, 4, 5, 6) or a compliant arm (27) connected to the assembly (3, 4, 5), via a ball bearing (31).

6. Retaining device according to Claim 5, characterized in that the arm (27) is designed as a spiral spring arrangement (28, 29).

7. Retaining device according to Claim 3 or one of the following claims, characterized in that the insert (42) is designed as a divisible, long pipe element (43), in which the supply lines (10) are led as a bundle or tube cluster (48).

8. Retaining device according to Claim 7, characterized in that the pipe element (43) consists of a flexible material having a parting line (47) along a generatrix and has in each case at its face ends an annular groove (44) for receiving a strap retainer (45).

9. Retaining device according to Claim 7, characterized in that the insert (19) is designed as a circular disc and consists of one or more parts (32, 33), which in each case have in their peripheral area outwardly open bores (22) with narrowed access opening (24) for the clipping-in of the supply lines (10).

10. Retaining device according to Claim 9, characterized in that the insert parts (32, 33) are guided one in the other (41) and held together positively by a circlip (37) or the like.

11. Retaining device according to Claim 7, characterized in that the insert (49) consists of a disc-shaped attachment (51) and two guide sleeves (52), a tube cluster (48) being led in the attachment (51) and the sleeves (52) and the attachment (51) having at least one peripherally accessible bore (22) for the leading of additional lines (10).

12. Retaining device according to Claim 11, characterized in that the insert (49) is designed as one piece, consists of flexible material and has a longitudinally running parting line (47), along which the insert (49) can be opened.

13. Retaining device according to Claim 11, characterized in that the insert (49) is of multipart design, the guide sleeves (52) being positively (54) guided in the disc-shaped attachment (51).

## Revendications

1. Dispositif de fixation pour des conduites d'alimentation d'outils en déplacement sur des manipulateurs, dans lequel les conduites d'alimentation (10) sont réunies en faisceau le long d'au moins un module (2, 3, 4, 5, 6) en déplacement du manipulateur (1) dans un ou plusieurs éléments de fixation (11), ces éléments de fixation (11) étant fixés de manière à pouvoir tourner, sur le manipulateur, respectivement au voisinage des axes (7, 8, 9, 34, 35, 36) du manipulateur, caractérisé par le fait que les éléments de fixation (11) sont disposés, avec leurs axes de rotation, coaxialement et à proximité immédiate des axes, (7, 8, 9, 34, 35, 36) du manipulateur, et que les conduites d'alimentation (10) s'étendent au moins le long du bras oscillant (3) et du bras en console (4), en étant disposés latéralement dans des éléments de fixation (11) prévus au niveau de l'axe (34) du bras oscillant et de l'axe (8) du bras en console.

2. Dispositif de fixation suivant la revendication 1, caractérisé par le fait que les conduites d'alimentation (10) s'étendent depuis le châssis de base (2) jusqu'à l'outil (39) en longeant le carroussel (6), le bras oscillant (2), le bras en console (1) et la main (5).

3. Dispositif de fixation suivant la revendication 1 ou 2, caractérisé par le fait que les éléments de fixation (11) comportent un boîtier tubulaire (13), qui est formé de deux parties (14, 15) reliées entre elles de façon articulée et comportant un dispositif de fermeture par serrage rapide (25) et dans lequel un insert (19, 42, 49) servant à loger les conduites d'alimentation (10, 48) est guidé.

4. Dispositif de fixation suivant la revendication 3, caractérisé par le fait que le boîtier tubulaire (13) est réalisé de manière à s'évaser en forme d'entonnoir (17) au niveau de ses deux extrémités.

5. Dispositif de fixation suivant les revendications 1 et 3, caractérisé par le fait que le boîtier tubulaire (13) est raccordé par bride, par l'intermédiaire d'un roulement à billes (31), aux modules (2, 3, 4, 5, 6) ou à un bras flexible (27) relié au module (3, 4, 5).

6. Dispositif de fixation suivant la revendication 5, caractérisé par le fait que le bras (27) est réalisé sous la forme d'un dispositif à ressort hélicoïdal (28, 29).

7. Dispositif de fixation suivant la revendication 3 ou l'une des suivantes, caractérisé par le fait que l'insert (42) est réalisé sous la forme d'un corps tubulaire allongé (43), pouvant être subdivisé et dans lequel les conduites d'alimentation (10) s'étendent sous la forme d'un faisceau ou d'un paquet de tuyaux (48).

8. Dispositif de fixation suivant la revendication 7, caractérisé par le fait que le corps tubulaire (43) est constitué en un matériau élastique comportant un joint de séparation (47) s'étendant le long d'une génératrice et comporte, au niveau de ses extrémités frontales, des gorges annulaires respectives (44) servant à loger une bande de serrage (43).

9. Dispositif de fixation suivant la revendication 7, caractérisé par le fait que l'insert (19) est réalisé sous la forme d'un disque circulaire et est constitué par une ou plusieurs parties (32, 33), qui possèdent, respectivement dans leur partie périphérique, des perçages (22) s'ouvrant vers l'extérieur et comportant une ouverture d'accès rétrécis (24) de manière à permettre la fixation par encliquetage des conduites d'alimentation (10).

10. Dispositif de fixation suivant la revendication 9, caractérisé par le fait que les inserts (32, 33) s'étendent les unes dans les autres (41) et sont maintenus assemblés selon une liaison par formes complémentaires au moyen d'un jonc (37) ou analogue.

11. Dispositif de fixation suivant la revendication 7, caractérisé par le fait que l'insert (49) est constitué par un appendice saillant en forme de disque (51) et par deux douilles de guidage (52), auquel cas un paquet de tuyaux (48) est guidé dans l'appendice saillant (51) et dans les douilles (52) et l'appendice saillant (51) comporte au moins un perçage périphérique accessible (22) pour le guidage de conduites supplémentaires (10).

12. Dispositif de fixation suivant la revendication 11, caractérisé par le fait que l'insert (49) est réalisé d'un seul tenant, est constitué en un matériau élastique et possède un joint de séparation longitudinal (47), le long duquel l'insert (49) peut être dégagé.

13. Dispositif de fixation suivant la revendication 11, caractérisé par le fait que l'insert (49) est formé de plusieurs éléments, auquel cas les douilles de guidage (52) sont guidées selon une liaison par formes complémentaires (54) dans l'appendice saillant en forme de disque (51).

FIG.1

Fa. KUKA Schweißanlagen + Roboter GmbH
Dipl.-Ing. H.-D. Ernicke, Patentanwalt
Blatt 1 von 6; 772-506,507

0 144 602

FIG. 2

FIG. 3

FIG. 4

3

FIG.5

Fa. KUKA Schweißanlagen + Roboter GmbH
Dipl.-Ing. H.-D. Ernicke, Patentanwalt
Blatt 3 von 6;  772-506,507

Fa. KUKA Schweißanlagen + Roboter GmbH
Dipl.-Ing. H.-D. Ernicke, Patentanwalt
Blatt 4 von 6; 772-506,507

FIG. 6

FIG. 7

FIG. 8

7

FIG. 9

FIG.10

Fa. KUKA Schweißanlagen + Roboter GmbH
Dipl.-Ing. H.-D. Ernicke, Patentanwalt
Blatt 3 von 6, 77 ...

FIG. 11

FIG. 12

FIG. 13

Fa. KUKA Schweißanlagen + Roboter GmbH
Dipl.-Ing. H.-D. Ernicke, Patentanwalt
Blatt 6 von 6, 772-50x.507